# EUROPEAN PATENT APPLICATION

(11) **EP 1 335 567 A1**
(43) Date of publication of application: **13.08.2003**
(21) Application number: 02002581.3
(22) Date of filing: 04.02.2002
(51) Int. Cl.: H04M 1/02

(54) **Double rotation axis type clam shell phone**

(71) Applicant: Sony International (Europe) GmbH, 10785 Berlin (DE)
(72) Inventor: Kijima, Kenji, 85609 Aschheim-Dornach (DE)
(74) Representative: Körber, Martin, Dipl.-Phys.

(57) **Abstract**

The present invention provides a mobile terminal (1) for use in a wireless telecommunication system having a casing with a first body (2) and a second body (3), each body having a front surface accommodating control elements (8, 9, 10) and/or display elements (11) and a back surface located on the side opposite the front surface of the respective body (2, 3), and a hinge joint (4, 5, 6, 7) with a first axis of rotation (6) for the first body (2) and a second axis of rotation (7) for the second body (3), with the hinge joint (4, 5, 6, 7) enabling the first body (2) to turn freely around the second body (3) between a first position, where the front surface of the first body (2) faces the front surface of the second body (3), a second position, where the front surface of the first body (2) and the front service of the second body (3) are simultaneously readable, and a third position, where the back surface of the first body (2) faces the back surface of the second body (3).

## Description

The present invention relates to a mobile terminal in a wireless telecommunication system, particularly to a mobile terminal integrating a variety of different services into a single device.

The usage of electronic media for communication purposes plays a major role of increasing importance in present-day societies. The most popular communication means used include for instance phone and E-mail services, network facilities like e.g. Internet access, remote inquiries or alike. Modern electronic communication means provide many different forms for contacting anyone around the world without much ado or for getting almost any information requested or for authorising certain operations with a minimum of time required, or the like.

Users of mobile communication systems request that they can access different communication means at any time and at any place they like. Providers of wireless telecommunication systems therefore offer services like GPRS (General Packet Radio Service) and HSCSD (High Speed Circuits Switched Data), allowing an enhanced transmission of data over mobile systems for voice, data, and video services, which extends the performance of telecommunication services far beyond that of a traditional mobile phone system.

As the ongoing trend to a miniaturisation of electronic devices allows to pack more and more functions in ever smaller casings, the former mobile phone already became a mobile terminal for mobile communication systems. Above that, the miniaturisation trend tends to integrate still further functionalities in a mobile terminal, which at first glance show no resemblance to a communication requirement like e.g. that of organisers, digital cameras, audio and media players, portable micro computers or others like that, thereby extending a mobile terminal to a personal digital assistant. A user will thus no longer have to handle and operate with a variety of different devices but will find all desired functionalities and information in one device.

The communication features still form a central part of such an integrated device as they form the basis for an exchange of information underlying nearly all personal activities. Many of the features integrated in a mobile terminal in addition to a phone capability require special control elements and, above all, a bigger display than one sufficient for simple mobile phones. A modern mobile terminal which integrates the features of many different devices therefore has to provide more space on its surface for accommodating all control and display elements which are required in addition to that used for the phone capabilities. This is somehow contradictory to the permanent endeavour for reducing the over-all dimensions of mobile terminals.

Furthermore, with the number of different functions integrated in a mobile terminal, a user might simply be asked too much when being confronted with too many control elements at the same time, and the risk increases, that he or she unintentionally activates an undesired function thereby consuming battery power or even spending money, e.g. by accidentally using wireless Internet services or the like.

JP2000-68883 discloses a cellular phone comprising three bodies and a hinge mechanism connecting the first body to a first narrow face of the second body, and the third body to a second narrow face opposite the first narrow face of the second body. The hinge mechanism enables the first and the third body to be turned around the central second body for either exposing or concealing the display of the phone. Two parts of the casing thereby have to be folded around a third part simultaneously requiring some concentration from a user.

JP6-33236 discloses a mobile electronic device with a casing formed of two parts interconnected by a hinge mechanism. Each part of the casing has a front side with control and/or display elements. The hinge mechanism enables to position the two parts either with the front sides facing each other, both front sides placed side by side, and one part placed on top of the front side of the other part with its own front side up. For changing a position a user has to unfold the casing and then turn one part in the appropriate position.

It is therefore an object of the present invention to provide a mobile terminal for use in wireless telecommunication systems, which allows to easily adapt the presentation of control and display elements to a respective form of usage.

This object is achieved by the features of the invention as defined in the independent claim.

In particular, the above object is achieved by a mobile terminal for use in a wireless telecommunication system having a casing with a first body and a second body, each body having a front surface accommodating control elements and/or display elements and a back surface located on the side opposite of the front surface of the respective body, and a hinge joint with a first axis of rotation for the first body and a second axis of ration for the second body, with the hinge joint enabling the first body to turn freely around the second body between a first position, where the front surface of the first body faces the front surface of the second body, a second position, where the front surface of the first body and the front surface of the second body are simultaneously readable, and a third position, where the back surface of the first body faces the back surface of the second body.

Forming the casing of a mobile terminal of two bodies pivotally connected by a double axis hinge joint according to the present invention, advantageously allows to change the shape of the casing between different arrangements such, that it can be adapted to the respective mode of usage. The over-all size of the casing can thereby be chosen to fit the current use, allowing a very compact structure particularly for the mobile terminal in an idle or an off state.

Further developments are set forth in the dependent claims.

By modifying the position of the first body with respect to the second body, a feature of the mobile terminal is advantageously activated and/or deactivated thus preventing a user from an unintentional activation of undesired functions provided by the mobile terminal.

The first and/or the second body are further advantageously stabilised by a catch mechanism in one or more preferred positions to achieve a steady form of the overall casing for all functions provided.

The rotation of the first body around the first axis is preferably limited by a limit stop formed on an arm of the hinge joint, advantageously allowing a controlled change over from a pivoting motion of the first body around the first axis of rotation to a pivoting motion around the second axis, when unfolding the double-body casing according to the present invention in excess of a rotation angle defined by the limit stop.

In a preferred embodiment of the present invention, a releasable latch mechanism allows to block the rotation of the second body around the second axis as an advantageous preventive measure against an unintentional folding of the casing of the mobile terminal. The releasable latch mechanism further advantageously blocks the rotation of the second body around the second axis automatically at a certain rotation angle of the second body around the second axis, steadying the mobile terminal casing in that certain position.

A mobile terminal according to the present invention can for example be implemented as a mobile personal digital assistant combining many different features, like e.g. those of a mobile phone, an organiser, a clock and/or alarm clock, computing facilities, audio and media players and the like.

In the following description, the present invention is explained in more detail with respect to special embodiments, and in relation to the enclosed drawings, in which
Fig. 1 shows a mobile terminal according to the present invention with the two bodies of the casing taking up four different positions with respect to each other,
Fig. 2 shows a schematic side view of the mobile terminal according to the present invention for six different pivoting positions of the casing bodies,
Fig. 3 shows a hinge joint according to a special embodiment of the present invention at two different pivoting positions, and
Fig. 4 is a cross-sectional view of the releasable latch mechanism according to the present invention.

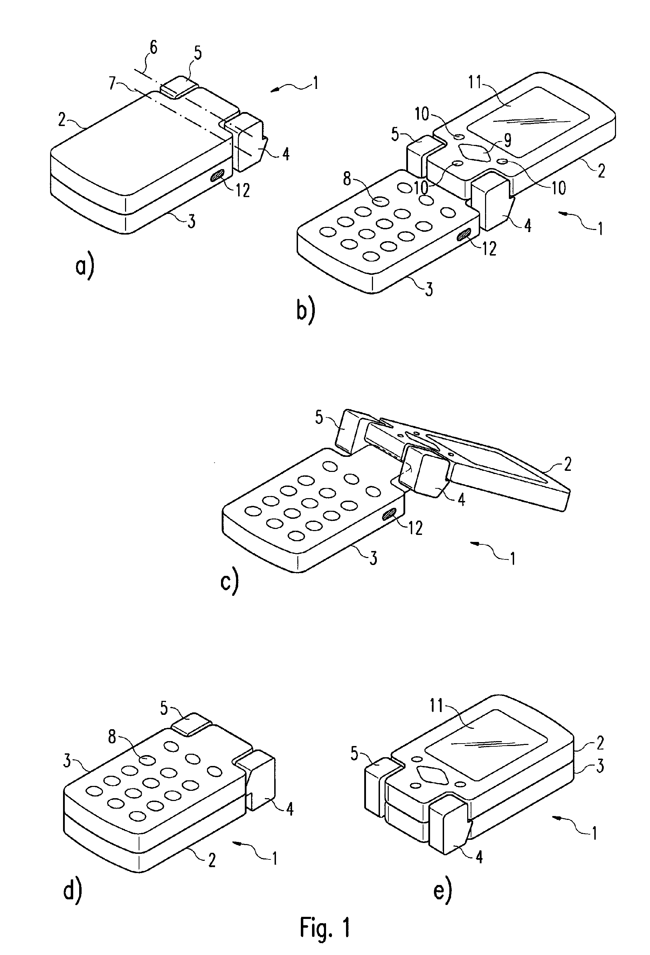

A mobile terminal 1 according to the present invention consists of two casing parts, namely an upper body 2 and a lower body 3. The upper body 2 and the lower body 3 comprise a front surface and a back surface. The front surface of the upper body 2 shown in Fig. 1b carries a display element 11, a positioning device 9, and function keys 10. The positioning device 11 may be formed by a jog dial, an arrangement of arrow keys or the like. The front surface of the lower body 3 carries the keypad 8. The present invention is not limited to the arrangement of the control elements like e.g. the keypad 8, the pointing device 9, the function keys 10 and the display element 11 as shown in Fig. 1b. Arrangements with the display 11 being e.g. located on the front surface of the lower body 3 and the keypad or parts of the keypad being located on the front surface of the upper body 2 or the like are also possible.

The upper body 2 is connected to the lower body 3 by a hinge joint formed from two hinge arms 4 and 5, a first axis of rotation 6, and a second axis of rotation 7. The dash-dotted lines indicated in Fig. 1a illustrate the location of the two rotation axes 6 and 7 around which a body or a hinge arm is allowed to rotate. The first rotation axis 6 forms the rotational centre for the upper body 2, while the second rotational axis 7 forms the rotational centre for the lower body 3, when the hinge arms 4 and 5 are assumed to be the frame of reference for a rotation. It is to be noted, that the two dash-dotted lines do not represent any mechanical design of the two rotational axles.

The hinge joint connecting the two bodies 2 and 3 according to the present invention, the mobile terminal resembles a clam shell type mobile phone whereby the clam shells are formed by the two bodies 2 and 3. When the mobile terminal 1 is in idle or stand-by position as shown in Fig. 1a, the front surfaces of the two bodies 2 and 3 face each other protecting the control elements 8, 9, and 10 and the display element 11 in the thus formed inside of the shell.

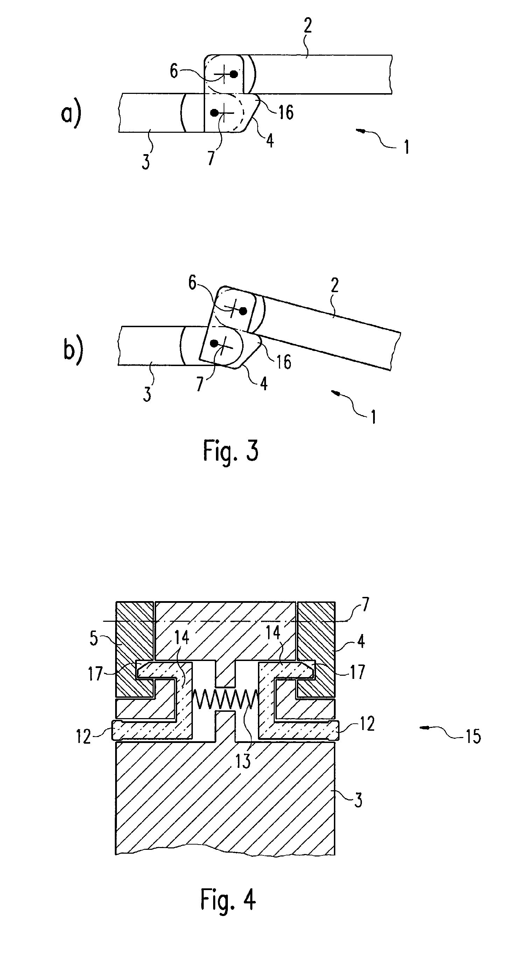

The five different pivoting states of the mobile terminal 1 shown in Fig. 1 illustrate the functioning of the hinge joint 4 at four exemplary folding conditions of the mobile terminal casing. The representation of Fig. 1a shows the mobile terminal 1 in its stand-by mode which is characterised by the control elements and the display 11 being hidden in the inside of the shell formed by the front surfaces of the two bodies 2 and 3 facing each other. A rotation of the hinge arms 4 and 5 or the lower body 3, respectively, around the second axis of rotation 7 is disabled in the stand-by mode position by a latch mechanism shown in Fig. 4. The latch mechanism can be released by a user if required by pressing on a knob 12 located on a narrow face of body 3.

Referring to Fig. 1b, the mobile terminal 1 is shown in the phone mode where the control elements 8, 9, and 10 and the display element 11 can be simultaneously viewed at by a user. To this respect, the bodies 2 and 3 can take in any obtuse angle up to an opening angle of approximately 180° by only turning the first body 2 around the first axis of rotation 6. A limit stop described further below, prevents the upper body 2 from being rotated above that maximum opening angle. In this unfolded state, the mobile terminal 1 is ready for an answering or placing of a call or for setting up a communication line used for other purposes supported by the mobile terminal 1. The limit stop prevents a user from unfolding the mobile terminal 1 too far when changing from the stand-by or idle mode shown in Fig. 1a to the phone mode shown in Fig. 1b.
This is further assisted by the releasable latch mechanism disabling a further rotation of the first body in unity with the hinge joint around the second rotation axis 7.

The bearings used for the rotation around the first axis 6 feature a catch mechanism which stabilises the upper body 2 in the position shown in Fig. 1b thus preventing the mobile terminal 1 from being unintentionally fold up during use. In a further embodiment of the present invention, the catch mechanism may provide additional catching points for a stabilisation of the upper body 2 at further opening angles. This allows a user to adjust his viewing angle to the display 11, when setting a mobile terminal 1 on a desk or the like instead of holding it by hand.

As the upper body 2 the mobile terminal 1 cannot be turned around in excess of the maximum angle limited by the limit stop, a user has to release the latch mechanism 15 by pressing the knobs 12 for turning the upper body 2 further around like shown in Fig. 1c. Now, the limit stop fixes the position of the hinge arms 4 and 5 relatively to the upper body 2 so that the further rotation takes place around the second axes 7.

This rotation can be continued until the backsides of the two bodies face each other like shown in Fig. 1d and Fig. 1e. In this state, the keypad 8 like the display with the positioning key 9 and the function keys 10 are now located on the opposite outsides of the mobile terminal 1 as shown in Fig. 1d. This state will be referred to as display orientated operation mode in the further description.

In a preferred embodiment of the present invention, the keypad 8 is disabled for the display orientated operation mode to avoid any unintentional entering of data or any activation of undesired functions. Alternatively, the keys may be countersinked below the outer surface of the lower body 3 or the keypad is formed within a depression of the surface accommodating the keypad. The display 11 together with the positioning 9 and function keys 10 is located at the opposite outer side as shown in Fig. 1e. The control elements 9 and 10 as well as the display 11 are active in this display orientated operation mode for allowing a user to check or send E-mails, use WAP (Wireless Application Protocol) services, play some games or simply have a look at the timer.

The communication links required for sending or receiving E-mails using the wireless Internet access of the mobile terminal 1 are configured by default. A User is therefore not required to change the mobile terminal 1 into its phone mode depicted in Fig. 1b for establishing a respective link. The same applies to a usage of browser functions. The folding state of Fig. 1e can therefore, compared to the phone mode be seen as the second operation mode of the mobile terminal 1, characterised by being especially suited for using the data and video services of a mobile telecommunication network. For a defined back-folding of the mobile terminal 1 from the display orientated operation mode to the phone mode and further on to the idle mode, the torque of the second rotation axis 7 is set weaker than that of the first rotation axes 6 resulting in a turning of the hinge arms 4 and 5 fixed to the upper body 2 around the second axis 7 until the latch mechanism 15 automatically blocks a further rotation around this axis 7 when the unfolding reached the phone mode position. The rotation is at this point transferred for the final back-folding from around the second axes 7 to around the first axes 6.

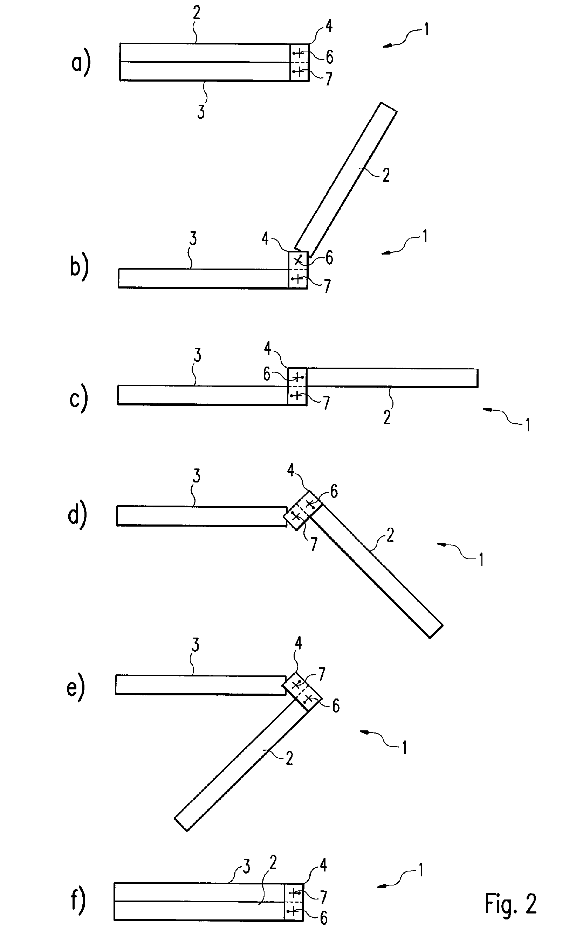

The single steps of the folding mechanism are illustrated in Fig. 2. Fig. 2a shows the clam shell type mobile terminal 1 in its first up-folded mode characterised by the front sides of bodies 2 and 3, which accommodate the control and/or display elements facing each other, and the hinge joint 4 connecting both bodies. The pivoting movement of the upper body 2 is centred around the first rotation axis 6, indicated by a small graticule in the illustration of Fig. 2. The second rotation axis 7 allows to turn the hinge arms 4 and 5 or the lower body 3, respectively, around it. A dot is shown at an end of one line of each graticule to indicate the rotational axes 6 and 7 for illustrating the respective rotation angle accomplished around a respective axis. Starting in the idle or stand-by mode of Fig. 2a, which can also be regarded as the mobile terminal in its closed position, the device is opened by turning the upper body 2 around the axis 6 as shown in Fig. 2b until the maximum opening angle as defined by the limits stop feature (Fig. 2c). A further rotation above that angle is taken over by the second axis 7 as shown in Fig. 2d. The rotation around the second axes is continued as shown in Fig. 2e until the back sides or back surfaces, respectively, of the two bodies 2 and 3 face each other in the second up-folded state of the mobile terminal 1 shown in Fig. 2f.

As described above for the first rotation axis 6, the bearings forming the second rotation axis 7 may advantageously also comprise a catch mechanism which stabilises the mobile terminal casing at certain rotation angles of the second rotation axis, preferably at the position allowing to use the mobile terminal 1 in its display oriented operation mode. Alternatively, the hinge joint can be fixed relative to the lower body 3 by a second interlock position provided by the latch mechanism 15.

Fig. 3 shows a detail of a limit stop construction for a preferred embodiment to illustrate the change over from the first rotation axis 6 to the second rotation axis 7. The hinge joint arms 4 like 5 are arranged in recesses of the upper body 2 and lower body 3 as can be seen from the illustrations of Fig. 1. The recesses are designed to allow a free rotation of the bodies around the circumference of the hinge arms 4 and 5. To prevent a rotation around the first axis 6 beyond the desired angle, a dent-like bulge 16 is formed on the respective side of one of the hinge arms 4 or 5 or on both. When the rotation of the upper body 2 reaches the desired rotation angle limited by the dent-like structure 16, are part of the back surface of body 2 close to the recession gets in direct contact with this limit stop 16. In this way, any further movement around the first rotation axis 6 is blocked by the limit stop 16, so that the second rotation axes 7 has to take over any further rotation of body 2 with respect to body 3 in the same direction. The recess formed in the lower body 3 is designed bigger than that of the upper body 2 for guaranteeing an unhindered rotation of the hinge arm showing a limit stop 16 until the final position for the display oriented operation mode

Alternative limit stop designs, e.g. formed by recesses on the hinge arms and on the upper body 2 complementary to each other or the like may also be used instead.

Fig. 4 shows a schematically cross-section of the releasable latch mechanism 15 for the second rotation axis 7. The blocking of a rotation around the second axis 7 is achieved by a stopper hook 14 with one of its legs inserted into a pocket hole or indentation formed in a hinge arm 4 or 5 off-centre to the second rotation axis 7 indicated by a dash-dotted line. A bulge is formed at the end of the opposite leg of the stopper hook 14 providing a release knob 12 protruding from a small side of the lower body 3 for allowing a user to release the latch by pressing on knob 12. The blocking of a rotation around the second axis 7 can be achieved with only one stopper hook 14 interlocking with only one hinge arm 4 or 5, but will be of a steadier construction with two symmetrically arranged stopper hooks 14 interlocking with both hinge arms 4 and 5 as shown in Fig. 4.

Once a user unblocked the latch and started to rotate the hinge arms 4 and 5 around the second axis 7, it can let go of release knob 12 without blocking the rotation again until a further pocket hole comes close enough to the respective leg of the stop hook 14, allowing it to insert itself. An automatic insertion of the stopper hook 14 is assisted by chamfers formed on one or more sides of the leg inserted into a pocket hole or indentation, and by a spring applying a constantly force to the stopper hook 14 and pressing the leg against the surface or in a hole of the respective hinge arm 4 or 5.

The construction of a hinge joint with a double rotation axis according to the present invention allows to keep the over-all dimensions of a mobile terminal even smaller than those of a traditional mobile phone with the additional advantage that the form of the device can be converted very quickly and vary easily to serve a particular function desired as e.g. wireless Internet usage, the display of images and even phone functionalities.

## Claims

1. A mobile terminal for use in a wireless telecommunication system, comprising
a casing with a first body and a second body, each body having a front surface accommodating control elements and/or display elements and a back surface located on the side opposite the front surface of the respective body, and
a hinge joint with a first axis of rotation for the first body and a second axis of rotation for the second body,
with the hinge joint enabling the first body to turn freely around the second body between a first position, where the front surface of the first body faces the front surface of the second body, a second position, where the front surface of the first body and the front surface of the second body are simultaneously readable, and a third position where the back surface of the first body faces the back surface of the second body.

2. A mobile terminal according to claim 1,
**characterised in**
**that** a feature of the mobile terminal is activated and/or deactivated by modifying the position of the first body with respect to the second body.

3. A mobile terminal according to claim 1 or 2,
**characterised in**
**that** a catch mechanism stabilises the first and/or the second body in one or more preferred positions.

4. A mobile terminal according to claim 1, 2 or 3,
**characterised in**
**that** the rotation of the first body around the first axis is limited by a limit stop formed on an arm of the hinge joint.

5. A mobile terminal according to one of the claims 1 to 4,
**characterised in**
**that** a releasable latch mechanism allows to block the rotation of the second body around the second axis.

6. A mobile terminal according to claim 5,
**characterised in**
**that** the releasable latch mechanism automatically blocks the rotation of the second body around the second axis for a certain rotation angle around the second axis.
